# EUROPEAN PATENT APPLICATION

(11) **EP 4 712 551 A1**
(43) Date of publication of application: **18.03.2026**
(21) Application number: 23936177.7
(22) Date of filing: 11.05.2023
(51) Int. Cl.: H04W 28/16

(54) **QOS CONTROL METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); THOMAS, Emmanuel, Beijing 100085 (CN)
(74) Representative: König, Andreas Rudolf
(86) International application number: PCT/CN2023/093712
(87) International publication number: WO 2024/229864

(57) **Abstract**

The present disclosure relates to a QoS control method and apparatus, and a communication device, a communication system and a storage medium. The method comprises: receiving a first PDU, wherein the first PDU belongs to a first SDF; determining that the first PDU has no extended packet header, wherein the extended packet header is used for identifying a PDU set; and mapping the first PDU to a first PDU set. By means of the solution of the present disclosure, the QoS characteristic of an SDF in XRM and interactive media services is ensured.

## Description

### TECHNICAL FIELD

The disclosure relates to a field of communication technologies, and particularly to a method and an apparatus for controlling quality of service (QoS), a communication device, a communication system, and a storage medium.

### BACKGROUND

In communication technologies such as the 5th generation mobile networks (5G), a mobile media service, online extend reality (XR), online games, remote control for a video-based machine or unmanned aerial vehicle(UAV), etc., are expected to contribute more and more traffic to a communication network.

Presently, because extended reality (XRM) and interactive media services have characteristics of high throughput, low delay and high reliability, there needs to comprehensively consider quality of service (QoS) characteristics of a service data flow (SDF).

### SUMMARY

For this, for a service data flow (SDF) with both a packet data unit (PDU) and a PDU set, there is no solution for processing the PDU in the SDF, so it is difficult to guarantee a QoS characteristic of the SDF.

Embodiments of the disclosure provide a method and an apparatus for controlling QoS, a communication device, a communication system, and a storage medium.

According to a first aspect of embodiments of the disclosure, a method for controlling QoS is provided. The method for controlling QoS is executed by a first network function. The method includes: receiving a first PDU, in which the first PDU belongs to a first SDF; determining that the first PDU does not have an extension header, in which the extension header is used for identifying a PDU set; and mapping the first PDU to a first PDU set.

According to a second aspect of embodiments of the disclosure, a method for controlling QoS is provided. The method is executed by a second network function. The method includes: determining first information associated with a first SDF; sending the first information to a first network function, in which the first information is used for the first network function to perform QoS control on a first PDU in the first SDF, the first PDF does not have an extension header, and the extension header is used to identify a PDU set.

According to a third aspect of embodiments of the disclosure, a method for controlling QoS is provided. The method is executed by an access network device. The method includes: receiving a second PDU sent by a first network function, in which the second PDU is obtained by mapping a first PDU belonging to a first SDF to a first PDU set, the first PDU does not have an extension header, and the extension header is used to identify a PDU set.

According to a fourth aspect of embodiments of the disclosure, a method for controlling QoS is provided. The method is executed by the terminal. The method includes: receiving a second PDU from an access network device, in which the second PDU is obtained by mapping a first PDU belonging to a first SDF to a first PDU set, the first PDU does not have an extension header, and the extension header is used to identify the PDU set.

According to a fifth aspect of embodiments of the disclosure, a method for controlling QoS is provided. The method is applied to a communication system. The method includes: sending a second PDU by a network device to a terminal, in which the second PDU is obtained by mapping a first PDU belonging to a first SDF to a first PDU set, the first PDU does not have an extension header, and the extension header is used for identifying the PDU set.

According to a sixth aspect of embodiments of the disclosure, a method for controlling QoS is provided. The method is applied to a core network device. The method includes: receiving a first PDU, in which the first PDU belongs to a first SDF; determining that the first PDU does not have an extension header, in which the extension header is used for identifying a PDU set; and mapping the first PDU to a first PDU set.

According to a seventh aspect of embodiments of the disclosure, an apparatus for controlling QoS is provided. The apparatus includes a receiving module and a processing module. The receiving module is configured to receive a first PDU, in which the first PDU belongs to a first SDF. The processing module is configured to determine that the first PDU does not have an extension header, in which the extension header is used to identify a PDU set; and to map the first PDU to a first PDU set.

According to an eighth aspect of embodiments of the disclosure, an apparatus for controlling QoS is provided. The apparatus includes a processing module and a sending module. The processing module is configured to determine first information associated with a first SDF. The sending module is configured to send the first information to a first network function, in which the first information is used for the first network function to perform QoS control on the first PDU in the first SDF, the first PDF does not have an extension header, and the extension header is used to identify the PDU set.

According to a ninth aspect of embodiments of the disclosure, an apparatus for controlling QoS is provided. The apparatus includes a receiving module. The receiving module is configured to receive a second PDU sent by a first network function, in which the second PDU is obtained by mapping a first PDU belonging to a first SDF to a first PDU set, the first PDU does not have an extension header, and the extension header is used to identify the PDU set.

According to a tenth aspect of embodiments of the disclosure, an apparatus for controlling QoS is provided. The apparatus includes a receiving module. The receiving module is configured to receive a second PDU from an access network device, in which the second PDU is obtained by mapping a first PDU belonging to a first SDF to a first PDU set, the first PDU does not have an extension header, and the extension header is used to identify the PDU set.

According to an eleventh aspect of embodiments of the disclosure, a communication device is provided. The communication device includes at least one processor and at least one memory. The memory is configured to store instructions. The processor is configured to call the instructions to cause the communication device to execute the methods according to the first to sixth aspects.

According to a twelfth aspect of embodiments of the disclosure, a communication system is provided. The communication system includes a first network function, a second network function, an access network device and a terminal. The first network function is configured to execute the method according to the first aspect. The second network function is configured to execute the method according to the second aspect. The access network device is configured to execute the method according to the third aspect. The terminal is configured to execute the method according to the fourth aspect.

According to a thirteenth aspect of embodiments of the disclosure, a storage medium is provided. The storage medium stores instructions. When the instructions are executed on a communication device, the communication device is caused to execute the methods according to the first to sixth aspects.

Through the embodiments of the disclosure, the QoS characteristic of the SDF in an extended reality (XRM) and interactive media services is guaranteed.

### BRIEF DESCRIPTION OF THE DRAWINGS

To more clearly illustrate the technical solution in embodiments of the disclosure, description is made below to accompanying drawings required in the description in embodiments of the disclosure. The following accompanying drawings are only some embodiments of the disclosure, which do not cause a detailed restriction on the protection scope of the disclosure.
FIG. 1 is a block diagram illustrating an architecture of a communication system according to an embodiment of the disclosure.
FIG. 2 is a schematic diagram illustrating an interaction of a method for controlling quality of service (QoS) according to an embodiment of the disclosure.
FIG. 3 is a flow chart illustrating a method for controlling QoS according to an embodiment of the disclosure.
FIG. 4 is a flow chart illustrating a method for controlling QoS according to an embodiment of the disclosure.
FIG. 5 is a flow chart illustrating a method for controlling QoS according to an embodiment of the disclosure.
FIG. 6 is a flow chart illustrating a method for controlling QoS according to an embodiment of the disclosure.
FIG. 7 is a flow chart illustrating a method for controlling QoS according to an embodiment of the disclosure.
FIG. 8 is a flow chart illustrating a method for controlling QoS according to an embodiment of the disclosure.
FIG. 9 is a block diagram illustrating a first apparatus for controlling QoS according to an embodiment of the disclosure.
FIG. 10 is a block diagram illustrating a second apparatus for controlling QoS according to an embodiment of the disclosure.
FIG. 11 is a block diagram illustrating a third apparatus for controlling QoS according to an embodiment of the disclosure.
FIG. 12 is a block diagram illustrating a fourth apparatus for controlling QoS according to an embodiment of the disclosure.
FIG. 13 is a block diagram illustrating a fifth apparatus for controlling QoS according to an embodiment of the disclosure.
FIG. 14 is a block diagram illustrating a communication device according to an embodiment of the disclosure.

### DETAILED DESCRIPTION

Embodiments of the disclosure provide a method and an apparatus for controlling quality of service (QoS), a communication device, a communication system, and a storage medium.

In a first aspect, embodiments of the disclosure provide a method for controlling QoS. The method is executed by a first network function, including: receiving a first packet data unit (PDU), in which the first PDU belongs to a first service data flow (SDF); determining that the first PDU does not have an extension header, in which the extension header is used to identify a PDU set; and mapping the first PDU to a first PDU set.

In the above embodiment, the first network function may map the PDU set with no extension header in the first SDF to the first PDU set, thus realizing mapping the first PDU within the first SDF and not belonging to an existing PDU set to the PDU set. In this way, the first network function may perform QoS control on the first PDU that does not belong to the existing PDU set, thus ensuring the QoS characteristics of the first SDF.

In combination with some embodiments of the first aspect, in some embodiments, the extension header includes at least one of: a PDU set sequence number; a start PDU or an end PDU of the PDU set; a PDU sequence number within the PDU set; a number of PDUs within the PDU set; a PDU set importance; a PDU set size; or an end of a data burst.

In the above embodiments, the extension header includes PDU set information. These PDU set information are used to indicate that the PDU where the extension header is located belongs to the PDU set. In this way, when it is determined that the first PDU does not have an extension header, it may be determined that the first PDU does not belong to the existing PDU set, such that the first PDU is mapped to the first PDU set.

In combination with some embodiments of the first aspect, in some embodiments, the first PDU set may be integrated by one or more PDUs, and none of the one or more PDUs comprises the extension header.

In the above embodiments, the first PDU is mapped to the first PDU set, and none of all PDUs in the first PDU set has an extension header. Any PDU in the first PDU set may be considered as one first PDU. In this way, one or more first PDUs can be mapped to the first PDU set for QoS control.

In combination with some embodiments of the first aspect, in some embodiments, the one or more PDUs of the first PDU set arrive within a time window.

In the above embodiment, the PDU in the first PDU set arrives within the time window. In this way, unified QoS control may be performed on the first PDU arrived within the time window.

In combination with some embodiments of the first aspect, in some embodiments, the first PDU set belongs to a first QoS flow corresponding to the first SDF, and all PDU sets in the first QoS flow have a same PDU set QoS parameter.

In the above embodiments, all PDU sets in the first QoS flow corresponding to the first SDF may have the same PDU set QoS parameter. In other words, the first PDU set and other PDU sets in the first QoS flow may have the same PDU set QoS parameter. In this way, the first PDU and other PDUs in the first SDF (a PDU with an extension header and a PDU without no extension header) may apply a PDU set QoS parameters communicated first.

In combination with some embodiments of the first aspect, in some embodiments, determining the first PDU does not have the extension header is achieved by at least one of: matching a real-time transport protocol (RTP) and/or secure real-time transport protocol (SRTP) header and a payload; using a new RTP extension header; information provided by an N6 encapsulation header; detection based on traffic characteristics; or a user plane function (UPF) local configuration.

In the above embodiments, it may be determined in various ways that the first PDU does not have an extension header. In this way, the flexibility of the determining operation is improved.

In combination with some embodiments of the first aspect, in some embodiments, mapping the first PDU to the first PDU set includes: mapping the first PDU to the first PDU set based on first information associated with the first SDF.

In the above embodiments, the first network function may map the first PDU to the first PDU set based on the first information associated with the first SDF. In this way, the correlation and/or consistency between the first PDU set and other PDU sets in the first SDF may be maintained.

In combination with some embodiments of the first aspect, in some embodiments, the first information includes at least one of: a PDU set QoS parameter, a protocol description, or a packet detection rule (PDR).

In the above embodiments, mapping the first PDU may be realized based on at least one of the PDU set QoS parameter, the protocol description, or the PDR. In this way, the correlation and/or consistency between the first PDU set and other PDU sets in the first SDF in at least one aspect of the PDU set QoS parameter, the protocol description or the PDR may be maintained.

In combination with some embodiments of the first aspect, in some embodiments, before receiving the first PDU, further including: receiving the first information from a second network function.

In the above embodiments, the first information may be sent by the second network function to the first network function. In this way, the first network function may realize mapping the first PDU based on the received external information.

In combination with some embodiments of the first aspect, in some embodiments, after mapping the first PDU to the first PDU set, the method may further incudes: sending a second PDU to an access network device, in which the second PDU is obtained by mapping the first PDU to the first PDU set.

In the above embodiments, after the first PDU is mapped to the first PDU set to obtain the second PDU, the second PDU may be sent to the access network device. Therefore, the second PDU is a PDU belonging to the first PDU set. In this way, the transmission of the second PDU between the first network function and the access network device may employ the QoS control based on the PDU set.

In a second aspect, embodiments of the disclosure provide a method for controlling quality of service (QoS), executed by a second network function. The method includes: determining first information associated with a first service data flow (SDF); sending the first information to a first network function, in which, the first information is used for the first network function to perform QoS control on a first packet data unit (PDU) in the first SDF, the first PDF does not have an extension header, and the extension header is used to identify a PDU set.

In the above embodiments, the first information may be sent by the second network function to the first network function. In this way, the first network function may realize mapping the first PDU based on the received external information, such that the first network function may perform QoS control on the first PDU that does not belong to the existing PDU set, thus ensuring the QoS characteristics of the first SDF.

In combination with some embodiments of the second aspect, in some embodiments, the first information includes at least one of: a PDU set QoS parameter, a protocol description, or a packet detection rule (PDR).

In combination with some embodiments of the second aspect, in some embodiments, an operation of determining the first information associated with the first SDF may include: receiving second information, in which the second information includes at least one of: the PDU set QoS parameter or the protocol description; and determining the first information based on the second information.

In the above embodiments, the second network function may determine the first information based on the PDU set QoS parameter and/or the protocol description in the received second information.

In combination with some embodiments of the second aspect, in some embodiments, the method may further include: sending third information to an access network device, in which the third information includes at least one of: the PDU set QoS parameter or the protocol description.

In the above embodiments, the third information is sent to the access network device. In this way, the access network device may realize the QoS control for the first SDF based on PDU set.

In a third aspect, embodiments of the disclosure provide a method for controlling QoS. The method is executed by an access network device. The method includes: receiving a second PDU sent by a first network function, in which, the second PDU is obtained by mapping a first PDU belonging to a first SDF to a first PDU set, the first PDU does not have an extension header, and the extension header is used to identify a PDU set.

In the above embodiments, the second PDU is obtained by mapping the first PDU belonging to the first SDF to the first PDU set. Then, the second PDU is a PDU belonging to the first PDU set. In this way, the transmission of the second PDU between the first network function and the access network device may employ the QoS control based on the PDU set, thus ensuring the QoS characteristics of the first SDF.

In combination with some embodiments of the third aspect, in some embodiments, the first PDU set is integrated by one or more PDUs, and none of the one or more PDUs comprises the extension header.

In combination with some embodiments of the third aspect, in some embodiments, the one or more PDUs of the first PDU set may arrive within a time window.

In combination with some embodiments of the third aspect, in some embodiments, the first PDU set may belong to a first QoS flow corresponding to the first SDF, and all PDU sets in the first QoS flow may have a same PDU set QoS parameter.

In combination with some embodiments of the third aspect, in some embodiments, the second PDU may include at least one of: a first PDU set sequence number; a start PDU or an end PDU of the first PDU set; a PDU sequence number within the first PDU set; a number of PDUs within the first PDU set; a first PDU set importance; a first PDU set size; or an end of a data burst.

In combination with some embodiments of the third aspect, in some embodiments, the method may also include: sending the second PDU to a terminal.

In the above embodiments, the second PDU is obtained by mapping the first PDU belonging to the first SDF to the first PDU set. Then, the second PDU is a PDU belonging to the first PDU set. In this way, the transmission of the second PDU between the access network device and the terminal may employ the QoS control based on the PDU set.

In combination with some embodiments of the third aspect, in some embodiments, the method may also include: receiving third information sent by the first network function, in which the third information includes at least one of: a PDU set QoS parameter, or a protocol description. Sending the second PDU to the terminal may include: sending the second PDU to the terminal based on the third information.

In combination with some embodiments of the third aspect, in some embodiments, the method may include: sending fourth information to the terminal based on the third information, in which the fourth information includes at least one of: the PDU set QoS parameter, or the protocol description.

In the above embodiments, the fourth information is obtained based on the third information, and sent to the terminal. The fourth information includes the PDU set QoS parameter and/or the protocol description, which enables the terminal to take the PDU set QoS parameter and/or the protocol description into consideration when uplink data (that is, an uplink PDU) related to the first SDF is sent.

In a fourth aspect, embodiments of the disclosure provide a method for controlling QoS. The method is executed by a terminal. The method includes: receiving a second PDU from an access network device, in which the second PDU is obtained by mapping a first PDU belonging to a first SDF to a first PDU set, the first PDU does not have an extension header, and the extension header is used to identify the PDU set.

In the above embodiments, the second PDU is obtained by mapping the first PDU belonging to the first SDF to the first PDU set. Then, the second PDU is a PDU belonging to the first PDU set. In this way, the transmission of the second PDU between the access network device and the terminal may employ the QoS control based on the PDU set, thus ensuring the QoS characteristics of the first SDF. The terminal may receive all PDUs of the first SDF under the QoS control based on the PDU set.

In combination with some embodiments of the fourth aspect, in some embodiments, the method may include: receiving fourth information from the access network device, in which the fourth information includes at least one of: a PDU set QoS parameter, or a protocol description. The fourth information is used for uplink data transmission.

In the above embodiments, the received fourth information includes the PDU set QoS parameter and/or the protocol description, which enables the terminal to take the PDU set QoS parameter and/or the protocol description into consideration when the uplink data (that is, uplink PDU) related to the first SDF is sent.

In a fifth aspect, embodiments of the disclosure provide a method for controlling QoS. The method is applied to a communication system. The method includes: sending, by a network device, a second PDU to a terminal, in which the second PDU is obtained by mapping the first PDU belonging to the first SDF to the first PDU set. The first PDU does not have an extension header. The extension header is used to identify the PDU set.

In combination with some embodiments of the fifth aspect, in some embodiments, the method may also include: sending, by the network device, fourth information to the terminal, in which, the fourth information includes at least one of: a PDU set QoS parameter or a protocol description. The fourth information is used for uplink data transmission from the terminal to the network device.

In a sixth aspect, embodiments of the disclosure provide a method for controlling QoS. The method is applied to a core network device. The method includes: receiving a first PDU, in which the first PDU belongs to a first SDF; determining that the first PDU does not have an extension header, in which the extension header is used to identify a PDU set; and mapping the first PDU to a first PDU set.

In combination with some embodiments of the sixth aspect, in some embodiments, the extension header includes at least one of: a PDU set sequence number; a start PDU or an end PDU of the PDU set; a PDU sequence number within the PDU set; a number of PDUs within the PDU set; a PDU set importance; a PDU set size; or an end of a data burst.

In combination with some embodiments of the sixth aspect, in some embodiments, the first PDU set may be integrated by one or more PDUs, and none of the one or more PDUs includes the extension header.

In combination with some embodiments of the sixth aspect, in some embodiments, the one or more PDUs of the first PDU set may arrive within a time window.

In combination with some embodiments of the sixth aspect, in some embodiments, the first PDU set may belong to a first QoS flow corresponding to the first SDF, and all PDU sets in the first QoS flow have a same PDU set QoS parameter.

In combination with some embodiments of the sixth aspect, in some embodiments, determining the first PDU does not have the extension header may be achieved by at least one of: matching a RTP and/or SRTP header and a payload; using a new RTP extension header; information provided by an N6 encapsulation header; detection based on traffic characteristics; or a UPF local configuration.

In combination with some embodiments of the sixth aspect, in some embodiments, mapping the first PDU to the first PDU set may include: mapping the first PDU to the first PDU set based on first information associated with the first SDF.

In combination with some embodiments of the sixth aspect, in some embodiments, the method may also include determining first information associated with the first SDF.

In combination with some embodiments of the sixth aspect, in some embodiments, the operation of determining the first information associated with the first SDF may include: determining the first information based on second information, in which the second information includes at least one of: a PDU set QoS parameter, or a protocol description.

In combination with some embodiments of the sixth aspect, in some embodiments, the first information may include at least one of: the PDU set QoS parameter, the protocol description, or a PDR.

In combination with some embodiments of the sixth aspect, in some embodiments, the method may also include: sending a second PDU to the access network device, in which the second PDU is obtained by mapping the first PDU to the first PDU set.

In combination with some embodiments of the sixth aspect, in some embodiments, the second PDU may include at least one of: a first PDU set sequence number; a start PDU or an end PDU of the first PDU set; a PDU sequence number within the first PDU set; a number of PDUs within the first PDU set; a first PDU set importance; a first PDU set size; or an end of a data burst.

In combination with some embodiments of the sixth aspect, in some embodiments, the method may also include: sending third information to the access network device, in which the third information includes at least one of: the PDU set QoS parameters, or the protocol description.

In a seventh aspect, embodiments of the disclosure provide an apparatus for controlling QoS. The method includes a receiving module and a processing module. The receiving module is configured to receive a first PDU, in which the first PDU belongs to a first SDF. The processing module is configured to determine that the first PDU does not have an extension header, and to map the first PDU to a first PDU set, in which the extension header is used to identify a PDU set.

In combination with some embodiments of the seventh aspect, in some embodiments, the extension header may include at least one of: a PDU set sequence number; a start PDU or an end PDU of the PDU set; a PDU sequence number within the PDU set; a number of PDUs within the PDU set; a PDU set importance; a PDU set size; or an end of a data burst.

In combination with some embodiments of the seventh aspect, in some embodiments, the first PDU set may be integrated by one or more PDUs, and none of the one or more PDUs comprises the extension header.

In combination with some embodiments of the seventh aspect, in some embodiments, the one or more PDUs of the first PDU set arrive within a time window.

In combination with some embodiments of the seventh aspect, in some embodiments, the first PDU set may belong to a first QoS flow corresponding to the first SDF, and all PDU sets in the first QoS flow may have a same PDU set QoS parameter.

In combination with some embodiments of the seventh aspect, in some embodiments, determining the first PDU does not have the extension header may be achieved by at least one of: matching an RTP and/or SRTP header and a payload; using a new RTP extension header; information provided by an N6 encapsulation header; detection based on traffic characteristics; or a UPF local configuration.

In combination with some embodiments of the seventh aspect, in some embodiments, the processing module may be configured to: map the first PDU to the first PDU set based on first information associated with the first SDF.

In combination with some embodiments of the seventh aspect, in some embodiments, the first information may include at least one of: a PDU set QoS parameter, a protocol description, or a PDR.

In combination with some embodiments of the seventh aspect, in some embodiments, the receiving module may be configured to: receive the first information from a second network function.

In combination with some embodiments of the seventh aspect, in some embodiments, the apparatus may also include a sending module. The sending module may be configured to send a second PDU to an access network device, in which the second PDU is obtained by mapping the first PDU to the first PDU set.

In an eighth aspect, embodiments of the disclosure provide a second apparatus for controlling QoS. The apparatus includes a processing module and a seconding module. The processing module is configured to determine first information associated with a first SDF. The sending module is configured to send the first information to a first network function, in which the first information is used for the first network function to perform QoS control on a first PDU in the first SDF, the first PDF does not have an extension header, and the extension header is used to identify a PDU set.

In combination with some embodiments of the eighth aspect, in some embodiments, the first information may include at least one of: a PDU set QoS parameter, a protocol description, or a PDR.

In combination with some embodiments of the eighth aspect, in some embodiments, the apparatus may include a receiving module. The receiving module may be configured to receive second information, in which the second information includes at least one of: the PDU set QoS parameter or the protocol description. The processing module may be configured to determine the first information based on the second information.

In combination with some embodiments of the eighth aspect, in some embodiments, the sending module may be configured to: send third information to an access network device, in which the third information includes at least one of: the PDU set QoS parameter or the protocol description.

In a ninth aspect, embodiments of the disclosure provide a third apparatus for controlling QoS. The apparatus includes a receiving module. The receiving module is configured to receive a second PDU sent by a first network function, in which the second PDU is obtained by mapping a first PDU belonging to a first SDF to a first PDU set, the first PDU does not have an extension header, and the extension header is used to identify a PDU set.

In combination with some embodiments of the ninth aspect, in some embodiments, the PDU set is integrated by one or more PDUs, and none of the one or more PDUs includes the extension header.

In combination with some embodiments of the ninth aspect, in some embodiments, the one or more PDUs of the first PDU set arrive within a time window.

In combination with some embodiments of the ninth aspect, in some embodiments, the first PDU set may belong to a first QoS flow corresponding to the first SDF, and all PDU sets in the first QoS flow may have a same PDU set QoS parameter.

In combination with some embodiments of the ninth aspect, in some embodiments, the second PDU may include at least one of: a first PDU set sequence number; a start PDU or an end PDU of the first PDU set; a PDU sequence number within the first PDU set; a number of PDUs within the first PDU set; a first PDU set importance; a first PDU set size; or an end of a data burst.

In combination with some embodiments of the ninth aspect, in some embodiments, the apparatus may include a sending module. The sending module may be configured to send the second PDU to a terminal.

In combination with some embodiments of the ninth aspect, in some embodiments, the receiving module may be configured to: receive third information sent by the first network function, in which the third information may include at least one of: a PDU set QoS parameter, or a protocol description. The sending module may be configured to send the second PDU to the terminal based on the third information.

In combination with some embodiments of the ninth aspect, in some embodiments, the sending module may be configured to: send fourth information to the terminal based on the third information, in which the fourth information may include at least one of: the PDU set QoS parameter, or the protocol description.

In a tenth aspect, embodiments of the disclosure provide a fourth apparatus for controlling QoS. The apparatus may include a receiving module. The receiving module is configured to receive a second PDU from an access network device, in which the second PDU is obtained by mapping a first PDU belonging to a first SDF to a first PDU set, the first PDU does not have an extension header, and the extension header is used to identify the PDU set.

In combination with some embodiments of the tenth aspect, in some embodiments, the receiving module may be configured to: receive fourth information from the access network device, in which the fourth information may include at least one of: a PDU set QoS parameter, or a protocol description. The fourth information is used for uplink data transmission.

In an eleventh aspect, embodiments of the disclosure provide a fifth apparatus for controlling QoS. The apparatus includes a receiving module and a processing module. The receiving module is configured to receive a first PDU, in which the first PDU belongs to a first SDF. The processing module is configured to determine that the first PDU does not have an extension header, in which the extension header is used to identify a PDU set; and to map the first PDU to a first PDU set.

In combination with some embodiments of the eleventh aspect, in some embodiments, the extension header includes at least one of: a PDU set sequence number; a start PDU or an end PDU of the PDU set; a PDU sequence number within the PDU set; a number of PDUs within the PDU set; a PDU set importance; a PDU set size; or an end of a data burst.

In combination with some embodiments of the eleventh aspect, in some embodiments, the first PDU set may be integrated by one or more PDUs, and none of the one or more PDUs includes the extension header.

In combination with some embodiments of the eleventh aspect, in some embodiments, the one or more PDUs of the first PDU set may arrive within a time window.

In combination with some embodiments of the eleventh aspect, in some embodiments, the first PDU set may belong to a first QoS flow corresponding to the first SDF, and all PDU sets in the first QoS flow may have a same PDU set QoS parameter.

In combination with some embodiments of the eleventh aspect, in some embodiments, determining the first PDU does not have the extension header may be achieved by at least one of: matching an RTP and/or SRTP header and a payload; using a new RTP extension header; information provided by an N6 encapsulation header; detection based on traffic characteristics; or a UPF local configuration.

In combination with some embodiments of the eleventh aspect, in some embodiments, the processing module may be configured to: map the first PDU to the first PDU set based on first information associated with the first SDF.

In combination with some embodiments of the eleventh aspect, in some embodiments, the processing module may be configured to determine first information associated with the first SDF.

In combination with some embodiments of the eleventh aspect, in some embodiments, the processing module may be configured to determine the first information based on second information, in which the second information includes at least one of: a PDU set QoS parameter or a protocol description.

In combination with some embodiments of the eleventh aspect, in some embodiments, the first information may include at least one of: the PDU set QoS parameter, the protocol description, or a PDR.

In combination with some embodiments of the eleventh aspect, in some embodiments, the apparatus may include a sending module. The sending module may be configured to send a second PDU to the access network device, in which the second PDU is obtained by mapping the first PDU to the first PDU set.

In combination with some embodiments of the eleventh aspect, in some embodiments, the second PDU may include at least one of: a first PDU set sequence number; a start PDU or an end PDU of the first PDU set; a PDU sequence number within the first PDU set; a number of PDUs within the first PDU set; a first PDU set importance; a first PDU set size; or an end of a data burst.

In combination with some embodiments of the eleventh aspect, in some embodiments, the sending module may be configured to send third information to the access network device, in which the third information includes at least one of: a PDU set QoS parameters or a protocol description.

In a twelfth aspect, embodiments of the disclosure provide a communication device. The communication device includes at least one processor and at least one memory. The memory is used to store instructions. The processor is configured to call instructions to cause the communication device to execute the method as described in the first to sixth aspects and alternative implementations of the first to sixth aspects.

In a thirteenth aspect, embodiments of the disclosure provide a communication system. The communication system includes a first network function, a second network function, an access network device and a terminal. The first network function is configured to execute the method as described in the first aspect and alternative implementations of the first aspect. The second network function is configured to execute the method as described in the second aspect and alternative implementations of the second aspect. The access network device is configured to execute the method as described in the third aspect and alternative implementations of the third aspect. The terminal is configured to execute the method as described in the fourth aspect and alternative implementations of the fourth aspect.

In a fourteenth aspect, embodiments of the disclosure provide a storage medium. The storage medium stores instructions. When the instructions executed on a communication device, the communication device is caused to execute the method as described in the first to sixth aspects and alternative implementations of the first to sixth aspects.

In a fifteenth aspect, embodiments of the disclosure provide a program product. The program product, when executed by a communication device, causes the communication device to execute the method as described in the first to sixth aspects and alternative implementations of the first to sixth aspects.

In a sixteenth aspect, embodiments of the disclosure provide a computer program. When the computer program is run on a computer, the computer is caused to execute the method as described in the first to sixth aspects and alternative implementations of the first to sixth aspects.

It may be understood that, all the first apparatus for controlling QoS, the second apparatus for controlling QoS, the third apparatus for controlling QoS, the fourth apparatus for controlling QoS, the fifth apparatus for controlling QoS, the communication device, the communication system, the storage medium, the program product, and the computer program are used for executing the method according to the embodiments of the disclosure. Therefore, beneficial effects achieved by the first apparatus for controlling QoS, the second apparatus for controlling QoS, the third apparatus for controlling QoS, the fourth apparatus for controlling QoS, the fifth apparatus for controlling QoS, the communication device, the communication system, the storage medium, the program product, and the computer program may refer to the beneficial effects in the corresponding methods, which are not described here.

Embodiments of the disclosure provide a method and an apparatus for controlling QoS, the communication device, the communication system and the storage medium. In some embodiments, terms such as the method for controlling QoS, an information processing method and a communication method may be replaced with each other, terms such as the apparatus for controlling QoS, an information processing apparatus and a communication device may be replaced with each other, and terms such as an information processing system and a communication system may be replaced with each other.

Embodiments of the disclosure are not exhaustive, but only schematic illustrations of some embodiments, which are not taken as a detailed limitation on the protection scope of the disclosure. In the case of no contradiction, each step in a certain embodiment may be realized as an independent embodiment, and respective steps may be arbitrarily combined. For example, a solution after removing some steps in a certain embodiment may also be realized as an independent embodiment, and an order of respective steps in a certain embodiment may be arbitrarily exchanged. In addition, alternative implementations in a certain embodiment may be arbitrarily combined. In addition, respective embodiments may be arbitrarily combined. For example, some or all steps of different embodiments may be arbitrarily combined. For another example, a certain embodiment may be arbitrarily combined with alternative implementations of other embodiments.

In various embodiments of the disclosure, if there is no special explanation and logical conflict, the terms and/or descriptions in respective embodiments are consistent and may be quoted from each other, and technical features in different embodiments may be combined to form a new embodiment according to an inherent logical relationship of the respective embodiments.

The term used in the embodiments of the disclosure is only for the purpose of describing a specific embodiment, which is not used as a limitation of the disclosure.

In embodiments of the disclosure, unless otherwise specified, elements in a singular form, such as "a", "an", "the", "the above", "this" and so on may represent "one and only one", and may also represent "one or more", "at least one" and the like. For example, in the case that articles such as "a", "an" and "the" in English are used in translation, a noun after the article may be understood as a singular expression or a plural expression.

In embodiments of the disclosure, the term "plurality of" refers to two or more.

In some embodiments, the terms "at least one of", "one or more", "a plurality of" and "multiple" may be used interchangeably.

In some embodiments, "at least one of A and B", "A and/or B", "in one case of A, in another case of B", "in response to one case A, and in response to another case B" and the like may include following technical solution based on a condition: in some embodiments, A (executed independently of B); in some embodiments, B (executed independently of A); in some embodiments, A or B is selected to be executed (A and B are selectively executed); and in some embodiments A and B (both A and B are executed). It is similar to the above when there are more branches such as A, B and C.

In some embodiments, the recording way such as "A or B" may include following technical solutions based on a condition: in some embodiments, A (executed independently of B); in some embodiments, B (executed independently of A); in some embodiments, and A or B is selected to be executed (A and B are selectively executed). It is similar to the above when there are more branches such as A, B and C.

A prefix word such as "first" and "second" in embodiments of this disclosure are merely used to distinguish different description objects, and do not limit a position, an order, a priority, a quantity or content of the description objects. For the description of the description objects, please refer to the description of the context in claims or embodiments, and should not constitute unnecessary limitation because of the use of the prefix word. For example, if the description object is a "field", ordinal numbers before the "field" in a "first field" and a "second field" does not limit the position or order between the "fields", and the "first" and "second" do not limit whether the "fields" that the "first" and "second" modify are in a same message and also do not limit an order of the "first field" and the "second field". For another example, if a description object is "level", ordinal numbers before "level" in "first level" and "second level" does not limit a priority of the "levels". For another example, the number of description objects is not limited by the ordinal numbers, which may be one or more. Taking "the first device" as an example, where the number of "devices" may be one or more. In addition, objects modified by different prefix words may be the same or different. For example, if the description object is "device", a "first device" and a "second device" may be the same device or different devices, and types of the "first device" and the "second device" may be the same or different. For another example, if the description object is "information", "first information" and "second information" may be the same information or different information, and contents of the "first information" and the "second information" may be the same or different.

In some embodiments, "including A", "containing A", "indicating A" and "carrying A" may be interpreted as directly carrying A or indirectly indicating A.

In some embodiments, terms "in response to ··· ···", "in response to determining••••••", "in the case that••••••", "when••••••", "while••••••" and "if••••••" may be replaced with each other.

In some embodiments, terms such as "greater than", "greater than or equal to", "not less than", "more than", "more than or equal to", "not less than", "higher than", "higher than or equal to", "not lower than", and "above" may be interchangeable. Terms such as "less than", "less than or equal to", "not greater than", "less than", "less than or equal to", "no more than", "lower than", "lower than or equal to", "not more than", and "below" may be replaced with each other.

In some embodiments, the apparatus may be interpreted as a physical or virtual apparatus, and the name of the apparatus is not limited to the name recorded in the embodiments. Terms such as "apparatus", "equipment", "device", "circuit", "network element", "node", "function", "unit", "section", "system", "network", "chip", "chip system", "entity", "main body", and so on may be replaced with each other.

In some embodiments, the "network" may be interpreted as the device (such as, the access network device, the core network devices, or the like.) included in the network.

In some embodiments, terms such as "access network device (AN device)", "radio access network device (RAN device)", "base station (BS)", "radio base station", "fixed station", "node", "access point", "transmission point (TP)", "reception point (RP) "transmission/reception point (TRP) ", "panel", "antenna panel", "antenna array", "cell", "macro cell", "small cell", "femto cell", "pico cell", "sector", "cell group", "serving cell", "carrier", "component carrier", "bandwidth part (BWP)" may be replaced with each other.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be replaced with each other.

In some embodiments, the access network device, the core network device, or the network device may be replaced with the terminal. For example, a structure communication between the access network devices, the core network devices or the network device and the terminal is replaced by a communication structure (such as, device-to-device (D2D), vehicle-to-everything (V2X), and the like) between multiple terminals. In this case, it may be set that the terminal has all or some of functions of the access network device. In addition, terms such as "uplink" and "downlink" may also be replaced by terms (such as "sidelink") corresponding to the communication between the terminals. For example, an uplink channel, a downlink channel, and the like may be replaced by a sidelink channel, and an uplink and a downlink may be replaced by a sidelink.

In some embodiments, the terminal may be replaced by the access network device, the core network device, or the network device. In this case, it may be set that the access network device, the core network device, or the network device may have all or some of functions of the terminal.

In some embodiments, obtaining data, information, and the like may comply with the laws and regulations of the host country.

In some embodiments, data, information, and the like may be obtained with the consent of the user.

In addition, each element, row or column in a table of embodiments of the disclosure may be realized as an independent embodiment, and a combination of any element, row or column may also be implemented as an independent embodiment.

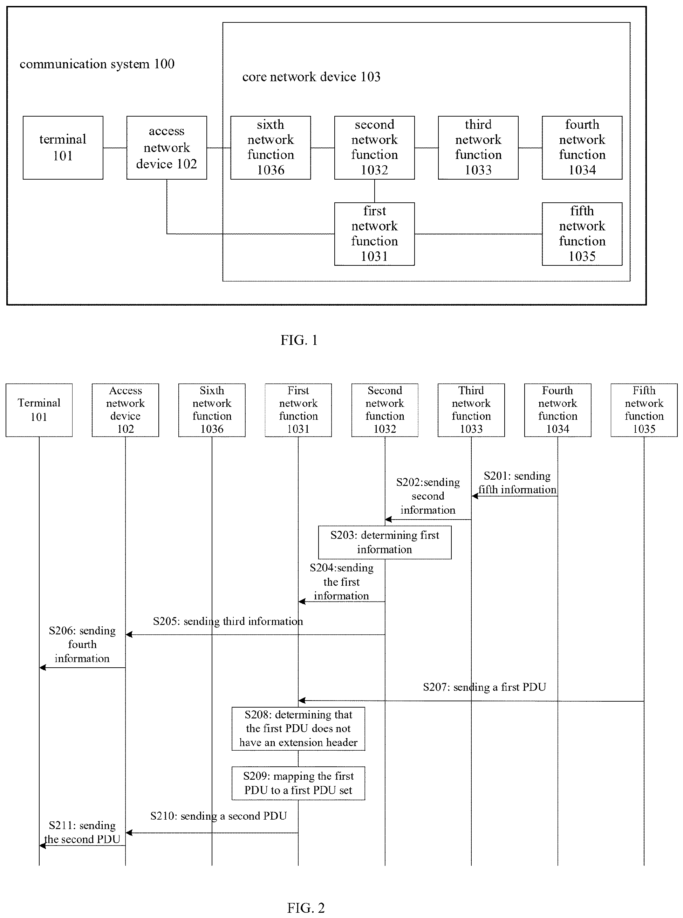

FIG. 1 is a block diagram illustrating an architecture of a communication system according to an embodiment of the disclosure. As illustrated in FIG. 1, the communication system 100 includes a terminal 101, an access network device 102 and a core network device 103.

In some embodiments, the terminal 101 may be at least one of, such as, a mobile phone, a wearable device, an Internet of Things device, a vehicle with a communication function, a smart vehicle, a tablet (Pad), a computer with a wireless transceiver function, a virtual reality (VR) terminal, an augmented reality, AR) terminal, a wireless terminal in industrial control, a wireless terminal in self-driving, a wireless terminal in remote medical surgery, a wireless terminal in smart grid, a wireless terminal in transportation safety, a wireless terminal in smart city and a wireless terminal in smart home, but not limited thereto.

In some embodiments, the access network device 102 is, such as, a node or device of a wireless network which the terminal accesses. The access network device may include an evolved Node B (eNB) in a 5G communication system, a next generation eNB (ng-eNB), a next generation Node B (gNB), a node B (NB), a home node B (HNB), a home evolved node B, (HeNB), a wireless backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication system, and an access node in a Wi-Fi system, which is not limited thereto.

In some embodiments, the technical solution of the disclosure may be applied to an open radio access network (open RAN) architecture. At this time, interfaces between the access network devices or within the access network device involved in embodiments of the disclosure may become internal interfaces of the open RAN, and a flow and information interaction between these internal interfaces may be realized by software or programs.

In some embodiments, the access network device 102 may be combined by a central unit (CU) and a distributed unit (DU), where the CU may also be called a control unit. Protocol layers of the access network device may be separated by using a structure of a CU-DU, and functions of some protocol layers are controlled in the CU, while functions of remaining or all protocol layers are distributed in the DU, and the DU is controlled by the CU, but not limited thereto.

In some embodiments, the access network device 102 may be referred to as access network function.

In some embodiments, the core network device 103 may be one device, including a first network function 1031, a second network function 1032, a third network function 1033, a fourth network function 1034, a fifth network function 1035, and the like, may also be multiple devices or groups of devices, respectively including some or all of the first network function 1031, the second network function 1032, and the third network function 1033, the fourth network function 1034, the fifth network function 1035, and the like. The network functions may be virtual or entity. For example, the core network includes at least one of an evolved packet core (EPC), a 5G core network (5GCN) and a next generation core (NGC).

In some embodiments, the core network device 103 may be referred to as the core network function.

In some embodiments, the first network function 1031 is, such as, a user plane function (UPF).

In some embodiments, the first network function 1031 is configured to realize a function such as user plane (UP) data forwarding, charging statistics based on a session/stream level, a bandwidth limitation, and QoS processing of a UP, the name of which is not limited to this.

In some embodiments, the second network function 1032 is, such as, a session management function (SMF).

In some embodiments, the second network function 1032 is used to realize session management functions, mainly including session management, PCF delivery control policy execution, UPF selection, internet protocol (IP) address assignment of UE, and the name is not limited to this.

In some embodiments, the third network function 1033 is, for example, a policy control function (PCF).

In some embodiments, the third network function 1033 is used to realize the policy control function, and is mainly responsible for policy decisions related to the charging policy, QoS bandwidth guarantee and policy of sessions and traffic flows, and the name is not limited to this.

In some embodiments, the fourth network function 1034 is, such as, an application function (AF).

In some embodiments, the fourth network function 1034 is used to provide policy control for business services, and the name is not limited to this.

In some embodiments, the fourth network function 1034 may be independent of the core network device 103.

In some embodiments, the fourth network function 1034 may be a part of the core network device 103.

In some embodiments, the fifth network function 1035 is, for example, an application server (AS).

In some embodiments, the fifth network function 1035 is used to provide business services, and the name is not limited thereto.

In some embodiments, the fifth network function 1035 may be independent of the core network device 103.

In some embodiments, the fifth network function 1035 may be part of the core network device 103.

In some embodiments, the fifth network function 1035 may be a server function of the fourth network function 1034.

In some embodiments, the fifth network function 1035 may be part of the fourth network function 1034.

In some embodiments, the fifth network function 1035 may be independent of the fourth network function 1034.

It may be understood that the communication system described in the embodiments of the disclosure is for the purpose of more clearly explaining the technical solution of the embodiments of the disclosure, and does not constitute a limitation on the technical solution proposed in the embodiments of the disclosure. Those skilled in the art may know that with the evolution of the system architecture and the appearance of a new business scenario, the technical solution proposed in the embodiments of the disclosure is also applicable to a similar technical problem.

Following embodiments of the disclosure may be applied to the communication system 100 illustrated in FIG. 1, or a part of the main body in the communication system 100, but are not limited thereto. Respective main bodies illustrated in FIG. 1 are examples. The communication system 100 may include all or some of the main bodies in FIG. 1, and may also include other main bodies other than FIG. 1. The number and form of respective main bodies are arbitrary, and respective main bodies may be physical or virtual. A connection relationship between the main bodies is examples. Respective main bodies may be unconnected or connected, and the connection may be in any way, direct or indirect, wired or wireless.

Embodiments of the disclosure may be applied to a long-term evolution, (LTE), an LTE-Advanced(LTE-A), an LTE-Beyond(LTE-B), a SUPER 3G, an IMT-Advanced, a 4-th generation mobile communication system, (4G), a 5-th generation mobile communication system (5G), a 5G new radio (NR), a Future Radio Access (FRA), a New-Radio Access Technology (RAT), a New Radio (NR), a New radio access (NX), a Future generation radio access (FX), a Global System for Mobile Communication (GSM (registered trademark)), a CDMA2000, an Ultra Mobile Broadband (UMB), an IEEE 802.11(Wi-Fi (registered trademark)), an IEEE 802.16(WiMAX (registered trademark)), an IEEE 802.20, an Ultra-WideBand (UWB), a Bluetooth (registered trademark), a Public Land Mobile Network (PLMN) network, a Device-to-Device (D2D) system, a machine-to-machine (M2M) system, an Internet of Things (IoT) system, a Vehicle-to-Everything (V2X) system, a system using other communication method, a next generation system extended based on the above, and the like. In addition, multiple systems may also be combined (such as, a combination of the LTE or LTE-A and 5G) for application.

In some cases, mobile media services, an XR service such as an online AR/VR, an online game, and a service such as remote control on a video-based machine or unmanned aerial vehicle are expected to contribute more and more traffic to the communication network. The XR service involves multimodal data streams. Multimodal data refers to data that describes the same business/application and is input from the same device or different devices (including sensors), and these data may be output to one or more destination terminals. Each data stream in the multimodal data often has a certain or even strong correlation, such as the synchronization of audio and video streams, tactile and visual synchronization, etc. There are some common characteristics in data streams of such kind of media services, the data streams, and a requirement of these service data streams for network transmission. The effective identification and utilization of these characteristics may be more conducive to the transmission and control of networks and services, and also to business security and user experience.

In further cases, the XRM service and the interactive media service require the communication system to comprehensively consider a QoS characteristic of a service data flow. The QoS characteristic includes parameters, such as, at least one of: a delay-sensitive guaranteed bit rate (GBR) data flow, a guaranteed flow bit rate (GFBR), a packet delay budget (PDB), a default maximum data burst volume (MDBV). It is determined whether the parameters may be simultaneously met and coordinated consistently. Multiple XRM data flows involving one terminal and XRM data flows involving multiple terminals ensure the consistency of QoS authorization and execution.

In some embodiments, the SDF of the XRM may support processing based on a PDU set, thus enhancing QoS perception and guarantee on the SDF and enhancing the quality of experience (QoE) of users.

In some embodiments, in a system such as 4G, 5G, 6G, V2X, the AF may provide a PDU set QoS parameter and a protocol description. In some embodiments, the PDU set QoS parameters may include at least one of: a PDU set delay budget (PSDB), a PDU set error rate (PSER), and a PDU set integrated handling information (PSIHI). Then, the SMF and the UPF may extend a header of a PDU in a PDU set of the SDF in combination with the protocol description and protocol header extension provided by the AF, to carry PDU set information. The carried PDU information may be used for the access network to control the QoS based on the PDU set.

In some embodiments, the above PDU information may include at least one of: a PDU set sequence number; a start PDU or an end PDU of the PDU set; a PDU sequence number within the PDU set; a number of PDUs within the PDU set; a PDU set importance; a PDU set size. Here, the PDU set importance is used to characterize the PDU set importance relative to other PDU sets in the same QoS flow.

It may be understood that, the UPF performs mapping from the SDF to the QoS flow based on the PDR, and maps (also called encapsulation) a related PDU into the PDU set. In addition, the UPF may employ a same QoS policy for all PDU sets in the QoS flow. For example, the UPF may apply the same PDU set QoS parameter to all the PDU sets within the QoS flow. In an example, the UPF may map an application flow to the QoS flow based on packet detection information in the PDR. Some PDUs in the QoS flow may be associated with a media component (such as an intra-coded frame and a predicted frame), and the UPF classifies these PDUs the PDU set and controls the PDUs accordingly.

FIG. 2 is a schematic diagram illustrating an interaction of a method for controlling QoS according to an embodiment of the disclosure. Embodiments of the disclosure involve the method for controlling the QoS, applied to the communication system 100. As illustrated in FIG. 2, the method for controlling the QoS in embodiments of the disclosure includes steps S201 to S211.

At step S201, the fourth network function 1034 sends second information to the third network function 1033.

In some embodiments, the third network function 1033 may receive the fifth information from the fourth network function 1034.

In some embodiments, the fifth information may be associated with a first SDF.

In some embodiments, the fifth information may be used for the third network function 1033 to perform QoS control on a PDU in the first SDF.

In some embodiments, the fifth information may be information related to PDU set QoS control and provided by the fourth network function 1034 to the third network function 1033.

In some embodiments, the fifth information may include at least one of: a protocol description, a PDU set QoS parameter.

In some embodiments, the protocol description may include a parameter related to frame identification.

In some embodiments, the PDU set QoS parameter may be included in PDU set related assistance information.

In some embodiment, the PDU set QoS parameter may include a QoS parameter for a PDU set in a QoS flow.

In some embodiments, the PDU set QoS parameter may include at least one of: a PDU set control indication, a PSDB, a PSER, or a PDU set integrated handling information (PSIHI).

In some embodiments, the PDU set control indication may be used to indicate whether to activate PDU set-based control to a flow.

In some embodiments, the PDU set control indication may be implicitly indicated by other PDU set related information provided by the fourth network function 1034.

In some embodiments, the PSIHI may be used to indicate whether the application layer needs all PDUs for the use of the PDU set.

In some embodiments, the fourth network function 1034 may send the second information to the third network function 1033 through an AF session with required QoS procedure.

In some embodiments, the fourth network function 1034 may send an Nnef_AFsessionWithQoS_Create request message to the third network function 1033. In some embodiments, the third network function 1033 may receive the Nnef_AFsessionWithQoS_Create request message from the fourth network function 1034. The Nnef_AFsessionWithQoS_Create request message may include the second information.

In some embodiments, the fourth network function 1034 may send the second information to the third network function 1033 in a PDU session establishment process.

In some embodiments, the fourth network function 1034 may send the second information to the third network function 1033 before the PDU session establishment procedure.

At step S202, the third network function 1033 sends second information to the second network function 1032.

In some embodiments, the third network function 1033 may generate the second information and send the second information to the second network function 1032.

In some embodiments, the second network function 1032 may receive the second information from the third network function 1033.

In some embodiments, the second information may be associated with the first SDF.

In some embodiments, the second information may be used for the second network function 1032 to perform QoS control on the PDU in the first SDF.

In some embodiments, the second information may include at least one of: the protocol description, or a PDU set QoS parameter.

In some embodiments, the PDU set QoS parameter may be included in a PDU set related assistance information.

In some embodiments, the PDU set QoS parameter may include the QoS parameter for the PDU set in the QoS flow.

In some embodiments, the PDU set QoS parameter may include at least one of: a PSDB, a PSER, a PSIHI, and indication information indicating whether to discard the PDU set when the PSDB is exceeded.

In some embodiments, the third network function 1033 may generate the second information based on the fifth information.

In some embodiments, the third network function 1033 may generate a policy control and charging (PCC) rule based on the fifth information and send the PCC rule to the second network function 1032. The PCC rule may include the second information.

In some embodiments, the third network function 1033 may generate the PCC rule based on the fifth information.

In some embodiments, the third network function 1033 may send the second information to the second network function 1032 in the PDU session establishment process.

In some embodiments, the third network function 1033 may send the second information to the second network function 1032 through a session management (SM) policy association establishment process.

In some embodiments, the third network function 1033 may send a Npcf_SMPolicyControl_Create response message to the second network function 1032. In some embodiments, the second network function 1032 may receive the NPCF_SMOPolicyControl_create response message from the third network function 1033. The above Npcf_SMPolicyControl_Create response message may include the second information.

In some embodiments, the third network function 1033 may send the second information to the second network function 1032 in a PDU session modification process.

In some embodiments, the third network function 1033 may send the second information to the second network function 1032 through a session management (SM) policy association modification process.

In some embodiments, the third network function 1033 may send a Npcf_SMPolicyControl_Update response message to the second network function 1032. In some embodiments, the second network function 1032 may receive the NPCF_SMOPolicyControl_Update response message from the third network function 1033. The above Npcf_SMPolicyControl_Update response message may include the second information.

In some embodiments, the second information may be the same as the fifth information.

At step S203, the second network function 1032 determines first information.

In some embodiments, the first information may be associated with a first SDF.

In some embodiments, the first information may be used for the first network function 1031 to perform QoS control on the PDU in the first SDF.

In some embodiments, the first information may include at least one of: the protocol description, the PDU set QoS parameter, or the PDR.

In some embodiments, the PDU set QoS parameter may be included in the PDU set related assistance information.

In some embodiment, the PDU set QoS parameter may include the QoS parameter for the PDU set in the QoS flow.

In some embodiments, the PDU set QoS parameter may include at least one of: the PSDB, the PSER, the PSIHI, and the indication information indicating whether to discard the PDU set when the PSDB is exceeded.

In some embodiments, the second network function 1032 may determine the first information based on the second information.

In some embodiments, the second network function 1032 may determine the first information based on the protocol description and/or the PDU set QoS parameter.

In some embodiments, the second network function 1032 may determine the first information in the case that the second information is not received.

In some embodiments, the second network function 1032 may determine the first information based on local configuration.

In some embodiments, the local configuration of the second network function 1032 may include at least one of: an operator configuration, a contracted user configuration, and a default configuration.

In some embodiments, the second network function 1032 may generate an N4 rule. The N4 rule may include the first information.

In some embodiments, the second network function 1032 may generate the N4 rules based on the second information.

In some embodiments, the second network function 1032 may generate the N4 rule based on the local configuration.

In some embodiments, the first information may be the same as the second information.

At step S204, the second network function 1032 sends the first information to the first network function 1031.

In some embodiments, the first network function 1032 may receive the first information from the second network function 1032.

In some embodiments, the second network function 1032 may send the N4 rule to the first network function 1031. The N4 rule may include the first information.

In some embodiments, the second network function 1032 may send the first information to the first network function 1031 in the PDU session establishment process.

In some embodiments, the second network function 1032 may send the first information to the first network function 1031 in the PDU session modification process.

At step S205, the second network function 1032 sends the third information to the access network device 102.

In some embodiments, the second network function 1032 may determine the third information and send the third information to the access network device 102.

In some embodiments, the access network device 102 may receive the third information from the second network function 1032.

In some embodiments, the third information may be associated with the first SDF.

In some embodiments, the third information may be used for the access network device 102 to perform QoS control on the PDU in the first SDF.

In some embodiments, the third information may include at least one of: the protocol description, the PDU set QoS parameter.

In some embodiments, the PDU set QoS parameter may be included in the PDU set related assistance information.

In some embodiment, the PDU set QoS parameter may include the QoS parameter for the PDU set in the QoS flow.

In some embodiments, the PDU set QoS parameter may include at least one of: the PSDB, the PSER, the PSIHI, and the indication information indicating whether to discard the PDU set when the PSDB is exceeded.

In some embodiments, the second network function 1032 may determine the third information based on the second information.

In some embodiments, the second network function 1032 may determine the third information based on the protocol description and/or the PDU set QoS parameters.

In some embodiments, the second network function 1032 may determine the third information in the case that the second information is not received.

In some embodiments, the second network function 1032 may determine the third information based on the local configuration.

In some embodiments, the local configuration of the second network function 1032 may include at least one of: the operator configuration, the contracted user configuration, and the default configuration.

In some embodiments, the second network function 1032 may generate a QoS profile. The above QoS configuration may include third information.

In some embodiments, the second network function 1032 may generate a QoS configuration based on the second information.

In some embodiments, the second network function 1032 may generate the QoS configuration based on the local configuration.

In some embodiments, the second network function 1032 may send the QoS configuration to the access network device 102.

In some embodiments, the second network function 1032 may send the third information to the access network device 102 in the PDU session establishment process.

In some embodiments, the second network function 1032 may send the third information to the access network device 102 in the PDU session modification process.

In some embodiments, the third information may be the same as the second information.

At step S206, the access network device 102 sends fourth information to the terminal 101.

In some embodiments, the access network device 102 may determine the fourth information based on the third information and send the fourth information to the terminal 101.

In some embodiments, the terminal 101 may receive the fourth information from the access network device 102.

In some embodiments, the fourth information may be associated with the first SDF.

In some embodiments, the fourth information may be used for the QoS control on the PDU in the first SDF at the terminal 101.

In some embodiments, the fourth information may be used for uplink data transmission of the terminal 101.

In some embodiments, the fourth information may be used for the PDU set-based QoS control of the uplink data transmission of the terminal 101.

In some embodiments, the fourth information may include at least one of: the protocol description or the PDU set QoS parameter.

In some embodiments, the PDU set QoS parameter may be included in the PDU set related assistance information.

In some embodiment, the PDU set QoS parameters may include the QoS parameter for the PDU set in the QoS flow.

In some embodiments, the PDU set QoS parameter may include at least one of: the PSDB, the PSER, the PSIHI, and the indication information indicating whether to discard the PDU set when the PSDB is exceeded.

In some embodiments, the fourth information may be the same as the third information.

At step S207, the fifth network function 1035 sends the first PDU to the first network function 1031.

In some embodiments, the first PDU may belong to the first SDF.

In some embodiments, the first PDU may belong to a first QoS flow corresponding to the first SDF.

In some embodiments, the first QoS flow may include one or more PDU sets.

In some embodiments, different sets of PDUs in the first QoS flow may have the same or different numbers of PDUs.

In some embodiments, all the PDU sets in the first QoS flow may have the same PDU set QoS parameter.

In some embodiments, the first PDU may not have an extension header.

In some embodiments, the extension header may be used for the first network function 1031 to identify PDU set information for the PDU.

In some embodiments, the extension header may be used for the first network function 1031 to identify the PDU set to which the PDU belongs.

In some embodiments, the extension header may be used to identify the PDU set.

In some embodiment, the extension header may be used to identify that an end of a data burst.

In some embodiments, the extension header may include PDU set information.

In some embodiments, PDU set information may include at least one of: a PDU set sequence number (PSSN), a start PDU or an end PDU of the PDU set, a PDU sequence number within the PDU set (PSN), a number of PDUs within the PDU set, a PDU set importance (PSI), a PDU set size (PSSize), or an end of a data burst (EDB).

In some embodiments, an identification of the PDU set in the extension header may be used for an identification of a media group.

In some embodiments, an identification of the end of the data burst in the extension header may be used for the identification of the media group.

In some embodiments, a PDU with an extension header may be identified as a media component and belongs to a PDU set.

In some embodiments, the QoS flow may be identified using a QoS flow identification.

In some embodiments, each PDU set in the QoS flow may be identified by the PDU set sequence number of the PDU set.

In some embodiments, the QoS flow may include one or more PDU sets.

In some embodiments, different sets of PDUs in the QoS flow may have the same or different numbers of PDUs. That is, different PDU sets in one flow may have the same or different sizes.

At step S208, the first network function 1031 determines that the first PDU does not have the extension header.

In some embodiments, the first network function 1031 may determine that the first PDU does not have the extension header based on the first information.

In some embodiments, the first network function 1031 may determine that the first PDU does not have an extension header based on the local configuration.

In some embodiments, the first network function 1031 may determine that the first PDU does not have the extension header based on the protocol description and/or PDR.

In some embodiments, the first network function 1031 may determine that the first PDU does not have the extension header based on the identification for the PDU set information of the first PDU.

In some embodiments, the first network function 1031 may determine that the first PDU does not have the extension header in the case that the first PDU does not include any PDU set information.

In some embodiments, the first network function 1031 may determine that the first PDU does not have the extended header through at least one of: matching an RTP and/or SRTP header and a payload; using a new RTP extension header; information provided by an N6 encapsulation header; detection based on traffic characteristics; or UPF local configuration.

At step S2019, the first network function 1031 maps the first PDU to the first PDU set.

In some embodiments, mapping the first PDU to the first PDU set by the first network function 1031 may be understood as that the first network function 1031 encapsulates the first PDU to the first PDU set.

In some embodiments, the first network function 1031 may map the first PDU with no extension header to the first PDU set.

In some embodiments, the first network function 1031 may map the first PDU to the first PDU set based on the first information.

In some embodiments, the first network function 1031 may map the first PDU to the first PDU set based on local configuration.

In some embodiments, the first PDU set may belong to the first QoS flow corresponding to the first SDF.

In some embodiments, the first PDU set may be the PDU set independent of an existing PDU set in the first QoS flow corresponding to the first SDF.

In some embodiments, the first PDU set and other PDU sets in the first QoS flow corresponding to the first SDF may have the same PDU set QoS parameter.

In some embodiments, the first PDU set may be a new PDU set.

In some embodiments, the first PDU set may be integrated by one or more first PDUs.

In some embodiments, the first PDU set may be integrated by one or more PDUs, and none of the PDUs includes the extension header.

In some embodiments, one or more PDUs of the first PDU set may have the same or similar PDU characteristics.

In some embodiments, the PDU in the first PDU set may arrive within a time window.

In some embodiments, the time window may be a time length represented in a time unit such as a frame, a subframe, a time slot, etc.

In some embodiments, the time window may be a length of time represented in a time unit such as a second, a microsecond, a femtosecond, a picosecond, etc.

In some embodiments, the time window may have a relatively small duration.

In some embodiments, arrived times of the PDUs in the first PDU set may be the same or similar.

In some embodiments, the first PDU set may include one PDU.

In some embodiments, the time window may have a relatively large duration.

In some embodiments, the PDU in the first PDU set may arrive within a preset length of time.

In some embodiments, the first network function 1031 maps the first PDU to the first PDU set, to obtain a second PDU.

At step S210, the first network function 1031 sends a second PDU to the access network device 102.

In some embodiments, the access network device 102 may receive the second PDU from the first network function 1031.

In some embodiments, the second PDU may be a PDU obtained by mapping the first PDU to the first PDU set.

In some embodiments, the second PDU may include PDU set information.

In some embodiments, the second PDU may include an extension header. The extension header may include the PDU set information.

In some embodiments, the PDU set information of the second PDU may include at least one of: the first PDU set sequence number, the start or end PDU of the first PDU set, the PDU sequence number within the first PDU set, the number of PDUs within the first PDU set, the first PDU set importance, the first PDU set size, and the end of the data burst.

At step S211, the access network device 102 sends the second PDU to the terminal 101.

In some embodiments, the terminal 101 may receive the second PDU from the access network device 102.

In some embodiments, the access network device 102 may perform QoS control based on the PDU set based on the third information.

In some embodiments, the access network device 102 may send the second PDU to the terminal 101 based on the third information.

In some embodiments, names of information and the like are not limited to names recorded in the embodiments. Terms such as information, message, signal, signaling, report, configuration, indication, instruction and command, parameter, domain, field, symbol, symbol, codebook, codeword, codepoint, bit, data, program, and chip may be replaced with each other.

In some embodiments, terms such as "uplink", "uplink", "physical uplink" and the like may be replaced with each other. Terms such as "downlink", "downlink", "physical downlink" and the like may be replaced with each other. Terms such as "side", "sidelink", "side communication", "sidelink communication", "direct connection," "direct link", "direct communication", "direct link communication" and the like may be used replaced with each other.

In some embodiments, terms "radio", "wireless", "radio access network (RAN)", "access network (AN)", "RAN-based" and the like may be replaced with each other.

In some embodiments, terms such as "moment", "time point", "time", "time position", and the like may be replaced with each other. Terms such as "duration", "time period", "time window", "window", "time" and the like may be replaced with each other.

In some embodiments, terms such as "frame", "radio frame", "subframe", "slot", "sub-slot", "mini-slot", "symbol", "symbol", "transmission time interval(TTI) " and the like may be replaced with each other.

In some embodiments, "obtaining", "acquiring", "getting", "receiving", "transmitting", "bidirectional transmission", and "sending and/or receiving" may be replaced with each other, which may be interpreted as multiple meanings such as receiving from other subjects, obtaining from protocols, obtaining from a higher layer, processing by itself, realizing independently.

In some embodiments, the terms "sending", "emitting", "reporting", "delivering", "transmitting", "sending and/or receiving" and the like may be replaced with each other.

In some embodiments, terms "specific", "preset", "predetermined", "set", "indicated", "certain", "any", "first" and the like may be replaced with each other. "Specific A", "preset A", "predetermined A", "set A", "indicated A", "certain A", "any A" and "first A" may be interpreted as a pre-specified A in an agreement, an A obtained by setting, configuration or indication, or a specific A, a certain A, any A or a first A, which is not limited thereto.

In some embodiments, judgment or determining may be performed through a value (0 or 1) represented by 1 bit, performed through a true or false value (boolean) represented by true or false, or performed through a comparison of numerical values (such as, comparison with a predetermined value), which it is not limited thereto.

The method for controlling QoS according to embodiments of the disclosure may include at least one of steps S201 to S211. For example, step S204 may be implemented as an independent embodiment. For example, a combination of steps S203 and S204 may be implemented as an independent embodiment. For example, a combination of steps S207, S208 and S209 may be implemented as an independent embodiment. For example, a combination of steps S204, S207, S208, S209 and S210 may be implemented as an independent embodiment. It should be noted that a possible independent embodiment combined by one or more steps at steps S201 to S211 is not limited to thereto.

In some embodiments, at least two of steps S201 to S211 may be performed in a reverse order or synchronously. For example, steps S204 and S205 may be performed in a reverse order or simultaneously. For example, steps S206 and S211 may be performed in a reverse order or simultaneously.

In some embodiments, steps S201 to S203 and S204 to S211 are alternative, and one or more of these steps may be omitted or replaced in different embodiments.

In some embodiments, steps S201 to S206 and S210 to S211 are alternative, and one or more of these steps may be omitted or replaced in different embodiments.

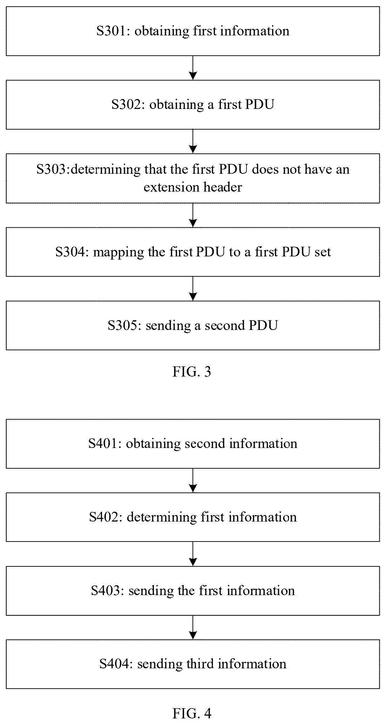

FIG. 3 is a flow chart illustrating a method for controlling QoS according to an embodiment of the disclosure. Embodiments of the disclosure relate to the method for controlling QoS. The method for controlling QoS is performed by the first network function 1031. As illustrated in FIG. 3, the method includes steps S301 to S305.

At step S301, first information is obtained.

For an implementation of step S301, please refer to the alternative implementation of step S204 in FIG. 2 and other related parts in the embodiments related to FIG. 2, which is not described here again.

In some embodiments, the first network function 1031 may receive the first information from the second network function 1032, but it is not limited thereto. In some embodiments, the first network function 1031 may receive the first information from other subject than the second network function 1032.

In some embodiments, the first network function 1031 may obtain the first information specified by the protocol.

In some embodiments, the first network function 1031 may obtain the first information from a higher layer.

In some embodiments, the first network function 1031 may perform processing to obtain the first information.

At step S302, a first PDU is obtained.

For an alternative implementation of step S302, please refer to the alternative implementation of step S207 in FIG. 2 and other related parts in the embodiments related to FIG. 2, which is not described here again.

In some embodiments, the first network function 1031 may receive the first PDU from the fifth network function 1035, but it is not limited thereto. In some embodiments, the first network function 1031 may receive the first PDU from other subject than the fifth network function 1035.

In some embodiments, the first network function 1031 may obtain the first PDU based on the local configuration.

In some embodiments, the fifth network function 1035 may be configured to send the first PDU to the first network function 1031.

At step S303, it is determined that the first PDU has no extension header.

For an alternative implementation of step S303, please refer to the alternative implementation of step S208 in FIG. 2 and other related parts in the embodiments related to FIG. 2, which is not described here.

In some embodiments, the extension header may include PDU set information in some embodiments.

In some embodiments, the extension header may include at least one of: PDU set sequence number, a start PDU or an end PDU of the PDU set, a PDU sequence number within the PDU set, a number of PDUs within the PDU set, a PDU set importance, a PDU set size, and end of data burst.

In some embodiments, the first network function 1031 may determine that the first PDU does not have the extended header by at least one of: matching an RTP and/or SRTP header and a payload; using a new RTP extension header; information provided by an N6 encapsulation header; detection based on traffic characteristics; or UPF local configuration.

At step S304, the first PDU is mapped to a first PDU set.

For an alternative implementation of step S304, please refer to the alternative implementation of step S209 in FIG. 2 and other related parts in the embodiments related to FIG. 2, which is not described here again.

In some embodiments, the first PDU set may be integrated by one or more PDUs, none of the one or more PDUs includes the extension header.

In some embodiments, a PDU of the first PDU set may arrive within a time window.

In some embodiments, the first PDU set may belong to a first QoS flow corresponding to the first SDF, and all PDU sets in the first QoS flow may have the same PDU set QoS parameter.

In some embodiments, the first network function 1031 may map the first PDU to the first PDU set based on the first information associated with the first SDF.

At step S305, the second PDU is sent.

For an alternative implementation of step S305, please refer to the alternative implementation of step S210 in FIG. 2 and other related parts in the embodiments related to FIG. 2, which is not described here.

In some embodiments, the second PDU may be obtained by mapping the first PDU to the first PDU set.

In some embodiments, the first network function 1031 may send the second PDU to the access network device 102, but it is not limited thereto. In some embodiments, the first network function 1031 may send the second PDU to other subject than the fifth network function 1035.

In some embodiments, the access network device 102 may be configured to receive the second PDU from the first network function 1031.

The method for controlling QoS according to embodiments of the disclosure may include at least one of steps S301 to S305. For example, step S301 may be implemented as an independent embodiment. For example, a combination of steps S302, S303 and S304 may be implemented as an independent embodiment. For example, a combination of steps S301, S302, S303 and S304 may be implemented as an independent embodiment. For example, a combination of steps S302, S303, S304 and S305 may be implemented as an independent embodiment. It should be noted that possible independent embodiments combined by one or more steps from steps S301 to S305 are not limited to this.

some embodiments, steps S302 to S305 are alternative, and one or more of these steps may be omitted or replaced in different embodiments.

In some embodiments, steps S301 and S305 are alternative, and one or more of these steps may be omitted or replaced in different embodiments.

FIG. 4 is a flow chart illustrating a method for controlling QoS according to an embodiment of the disclosure. Embodiments of the disclosure relate to the method for controlling QoS. The method for controlling QoS is performed by the second network function 1032. As illustrated in FIG. 4, the method includes steps S401 to S404.

At step S401, second information is obtained.

For an alternative implementation of step S401, please refer to the alternative implementation of step S202 in FIG. 2 and other related parts of the embodiments in FIG. 2, which is not described here again.

In some embodiments, the second network function 1032 may receive the second information from the third network function 1033, but it is not limited thereto. In some embodiments, the second network function 1032 may receive the second information from other subjects than the third network function 1033.

In some embodiments, the second network function 1032 may obtain the second information specified by the protocol.

In some embodiments, the second network function 1032 may obtain the second information from the higher layer.

In some embodiments, the second network function 1032 may perform processing to obtain the second information.

In some embodiments, the second information may include at least one of: the PDU set QoS parameter, or the protocol description.

At step S402, the first information is determined.

For an alternative implementation of step S402, please refer to the alternative implementation of step S203 in FIG. 2 and other related parts of the embodiments in FIG. 2, which is not described here.

In some embodiments, the second network function 1032 may determine the first information based on the second information.

At step S403, the first information is sent.

For an alternative implementation of step S403, please refer to the alternative implementation of step S204 in FIG. 2 and other related parts of the embodiments in FIG. 2, which is not described here.

In some embodiments, the second network function 1032 may send the first information to the first network function 1031, but it is not limited thereto. In some embodiments, the first network function 1031 may send the first information to other subject than the first network function 1031.

In some embodiments, the first information may include at least one of: the PDU set QoS parameter, the protocol description, or the PDR.

In some embodiments, the first network function 1031 may be configured to receive the first information from the second network function 1032.

In some embodiments, the first information may be used by the first network function 1031 to determine that the first PDU does not have the extension header and to map the first PDU to the first PDU set. For an alternative implementation, please refer to the alternative implementation of steps S208 and 209 in FIG. 2, and other related parts in the embodiments related to FIG. 2, which is not described here.

At step S404, third information is sent.

For an alternative implementation of step S404, please refer to the alternative implementation of step S205 in FIG. 2 and other related parts in the embodiments related to FIG. 2, which is not described here again.

In some embodiments, the third information may include at least one of: th PDU set QoS parameter and a protocol description.

In some embodiments, the second network function 1031 may send the third information to the access network device 102, but it is not limited thereto. In some embodiments, the first network function 1031 may send the third information to other subject than the access network device 102.

In some embodiments, the access network device 102 may be configured to receive the third information from the second network function 1032.

In some embodiments, the third information may be used for the access network device 102 to send the fourth information. For an alternative implementation, please refer to the alternative implementation of step S206 in FIG. 2 and other related parts in the embodiment related to FIG. 2, which is not described here.

The method for controlling QoS according to embodiments of the disclosure may include at least one of steps S401 to S404. For example, step S403 may be implemented as an independent embodiment. For example, a combination of steps S402 and S403 may be implemented as an independent embodiment. For example, a combination of steps S403, S304 and S405 may be implemented as an independent embodiment. It should be noted that a possible independent embodiment combined by one or more steps from steps S401 to S404 is not limited to this.

In some embodiments, steps S401, S402 and S404 are alternative, and one or more of these steps may be omitted or replaced in different embodiments.

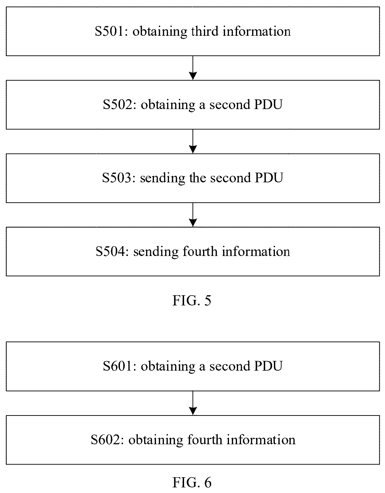

FIG. 5 is a flow chart illustrating a method for controlling QoS according to an embodiment of the disclosure. Embodiments of the disclosure relate to the method for controlling OoS. The method for controlling OoS is executed by the access network device 102. As illustrated in FIG. 5, the method includes steps S501 to S505.

At step S501, the third information is obtained.

For an alternative implementation of step S501, please refer to the alternative implementation of step S205 in FIG. 2 and other related parts in the embodiments related to FIG. 2, which is not described here.

In some embodiments, the access network device 102 may receive the third information from the second network function 1032, but it is not limited thereto. In some embodiments, the access network device 102 may receive the third information from other subject than the second network function 1032.

In some embodiments, the third information may include at least one of: the PDU set QoS parameter, or the protocol description.

In some embodiments, the access network device 102 may obtain the third information specified by the protocol.

In some embodiments, the access network device 102 may obtain the third information from the higher layer.

In some embodiments, the access network device 102 may perform processing to obtain the third information.

At step S502, the second PDU is obtained.

For an alternative implementation of step S502, please refer to the alternative implementation of step S210 in FIG. 2 and other related parts in the embodiments related to FIG. 2, which is not described here.

In some embodiments, the second PDU may be obtained by mapping the first PDU belonging to the first SDF to the first PDU set.

In some embodiments, the first PDU may not have the extension header.

In some embodiments, the extension header may be used to identify the PDU set.

In some embodiments, the first PDU set may be integrated by one or more PDUs.

In some embodiments, none of the PDUs in the first PDU set may include the extension header.

In some embodiments, the PDU of the first PDU set may arrive within the time window.

In some embodiments, the first PDU set may belong to the first QoS flow corresponding to the first SDF.

In some embodiments, all PDU sets in the first QoS flow may have the same PDU set QoS parameter.

In some embodiments, the second PDU may include at least one of: a first PDU set sequence number, a start PDU or an end PDU of the first PDU set, a PDU sequence number within the first PDU set, a number of PDUs within the first PDU set, a first PDU set importance, a first PDU set size, and an end of a data burst.

In some embodiments, the access network device 102 may receive the second PDU from the first network function 1031, but is not limited thereto. In some embodiments, the access network device 102 may receive the second PDU from other subject than the first network function 1031.

In some embodiments, the access network device 102 may obtain the second PDU based on the local configuration.

In some embodiments, the first network function 1031 may be used to send the second PDU to the access network device 102.

At step S503, the second PDU is transmitted.

For an alternative implementation of step S503, please refer to the alternative implementation of step S211 in FIG. 2 and other related parts in the embodiments related to FIG. 2, which is not described here.

In some embodiments, the access network device 102 may send the second PDU to the terminal 101, but it is not limited thereto. In some embodiments, the access network device 102 may send the second PDU to other subject than the terminal 101.

At step S504, the fourth information is sent.

For an alternative implementation of step S504, please refer to the alternative implementation of step S206 in FIG. 2 and other related parts in the embodiments related to FIG. 2, which is not be described here.

In some embodiments, the access network device 102 may send the fourth information to the terminal 101, but is not limited thereto. In some embodiments, the access network device 102 may send the fourth information to other subject than the terminal 101.

In some embodiments, the access network device 102 may send the fourth information to the terminal based on the third information.

In some embodiments, the fourth information may include at least one of: the PDU set QoS parameter or the protocol description.

In some embodiments, the terminal 101 may be configured to receive the fourth information from the access network device 102.

In some embodiments, the fourth information may be used for uplink data transmission of the terminal 101.

The method for controlling QoS according to the embodiments of the disclosure may include at least one of steps S501 to S504. For example, step S502 may be implemented as an independent embodiment. For example, a combination of steps S501 and S502 may be implemented as an independent embodiment. For example, a combination of steps S501, S502 and S503 may be implemented as an independent embodiment. It should be noted that a possible independent embodiment combined by one or more steps from step S501 to step S504 is not limited to thereto.

In some embodiments, at least two of steps S501 to S504 may be performed in a reverse order or synchronously. For example, steps S503 and S504 may be performed in a reverse order or simultaneously.

In some embodiments, steps S501, S503 and S504 are alternative, and one or more of these steps may be omitted or replaced in different embodiments.

FIG. 6 is a flow chart illustrating a method for controlling QoS according to an embodiment of the disclosure. Embodiments of the disclosure relate to the method for controlling QoS. The method for controlling QoS is executed by the terminal 101. As illustrated in FIG. 6, the method includes steps S601 to S602.

At step S601, the second PDU is obtained.

For an alternative implementation of step S602, please refer to the alternative implementation of step S211 in FIG. 2 and other related parts in the embodiments related to FIG. 2, which is not described here again.

In some embodiments, the terminal 101 may receive the second PDU from the access network device 102, but is not limited thereto. In some embodiments, the terminal 101 may receive the second PDU from other subject than the access network device 102.

In some embodiments, the access network device 102 may be used to send the second PDU to the terminal 101.

At step S602, the fourth information is obtained.

For an alternative implementation of step S602, please refer to the alternative implementation of step S206 in FIG. 2 and other related parts in the embodiments related to FIG. 2, which is not described here again.

In some embodiments, the fourth information may include at least one of: the PDU set QoS parameter or the protocol description.

In some embodiments, the access network device 102 may send the fourth information to the terminal 101, but is not limited thereto. In some embodiments, the access network device 102 may send the fourth information to other subject than the terminal 101.

In some embodiments, the access network device 102 may be used to send the fourth information to the terminal 101.

In some embodiments, the fourth information may be used for uplink data transmission of the terminal 101.

The method for controlling QoS according to the embodiments of the disclosure may include at least one of steps S601 to S602. For example, step S601 may be implemented as an independent embodiment. For example, a combination of steps S601 and S602 may be implemented as an independent embodiment. It should be noted that a possible independent embodiment combined by one or more steps from step S601 to step S602 is not limited to this.

In some embodiments, steps S601 and S602 may be performed in a reverse order or synchronously.

In some embodiments, steps S601 and S602 are alternative, and one or more of these steps may be omitted or replaced in different embodiments.

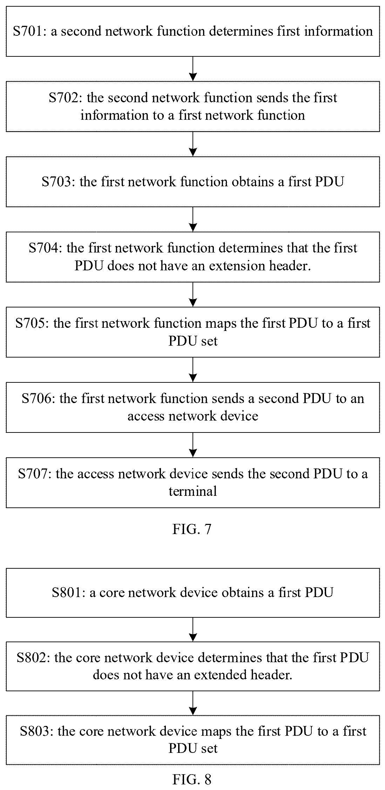

FIG. 7 is a flow chart illustrating a method for controlling QoS according to an embodiment of the disclosure. Embodiments of the disclosure relate to the method for controlling QoS. The method for controlling QoS is executed by the communication system 100. As illustrated in FIG. 7, the method includes steps S701 to S707.

At step S701, the second network function 1032 determines the first information.

For an alternative implementation of step S701, please refer to the alternative implementation of step S203 in FIG. 2, step S4102 in FIG. 4, and other related parts in the embodiments related to FIG. 2 and FIG. 4, which will not be described here again.

At step S702, the second network function 1032 sends the first information to the first network function 1031.

An alternative implementation of step S702 may be found alternative implementations of step S204 of FIG. 2, step S301 of FIG. 3, step S403 of FIG. 4, and other related parts of the embodiments related to in FIG. 2, FIG. 3 and FIG. 4, which is not described here.

At step S703, the first network function 1031 obtains the first PDU.

An alternative implementation of step S703 may refer to the alternative implementation of step S207 in FIG. 2, step S302 in FIG. 3, and other related parts in the embodiments related to FIG. 2 and FIG. 3, which is not described here.

At step S704, the first network function 1031 determines that the first PDU does not have the extension header.

An alternative implementation of step S704 may be found the alternative implementation of step S208 of FIG. 2, step S303 of FIG. 3, and other related parts of the embodiments related to FIG. 2 and FIG. 3, which is not described here.

At step S705, the first network function 1031 maps the first PDU to the first PDU set.

The alternative implementation of step S705 may refer to the alternative implementation of step S209 in FIG. 2, step S304 in FIG. 3, and other related parts in the embodiments related to FIG. 2 and FIG. 3, which is not described here.

At step S706, the first network function 1031 sends the second PDU to the access network device 102.

An alternative implementation of step S706 may refer to the alternative implementations of step S210 in FIG. 2, step S305 in FIG. 3, step S502 in FIG. 5, and other related parts of the embodiments related to FIG. 2, FIG. 3 and FIG. 5, which is not described here.

At step S707, the access network device 102 sends the second PDU to the terminal 101.

An alternative implementation of step S707 may refer to the alternative implementations of step S211 in FIG. 2, step S503 in FIG. 5, step S601 in FIG. 6, and other related parts of the embodiments related to FIG. 2, FIG. 5 and FIG. 6, which is not described here.

In some embodiments, the above methods may include the methods described in the embodiments of the above communication system side, terminal side, access network device side, core network device side, first network function side, second network function side, etc., which are not described in detail here.

FIG. 8 is a flow chart illustrating a method for controlling QoS according to an embodiment of the disclosure. Embodiments of the disclosure relate to the method for controlling QoS. The method for controlling QoS is executed by the core network device 103. As illustrated in FIG. 8, the method includes steps S801 to S803.

At step S801, the core network device 103 obtains the first PDU.

The alternative implementation of step S801 may refer to the alternative implementation of step S203 in FIG. 2, step S402 in FIG. 4, and other related parts in the embodiments related to FIG. 2 and FIG. 4, which are not described here.

At step S802, the core network device 103 determines that the first PDU does not have the extension header.

For an alternative implementation of step S802, please refer to the alternative implementation of step S208 in FIG. 2, step S303 in FIG. 3, and other related parts in the embodiments related to FIG. 2 and FIG. 3, which is not described here again.

At step S803, the first network function 1031 maps the first PDU to the first PDU set.

An alternative implementation of step S803 may refer to the alternative implementation of step S209 in FIG. 2, step S304 in FIG. 3, and other related parts of the embodiments related to FIG. 2 and FIG. 3, which is not described here.

In some embodiments, the above method may include the method described in the embodiments of the communication system side, the core network side, the first network function side, the second network function side, etc., which is not repeated here.

Embodiments of the disclosure also provide an apparatus for implementing any of the above methods. For example, an apparatus is proposed, and the apparatus includes units or modules for implementing the steps executed by the terminal in any of the above methods. For another example, another apparatus is also proposed, including units or modules to realize the steps executed by the network device (such as the access network device, the core network function node, the core network device, etc.) in any of the above methods. It should be understood that the division of each unit or module in the above apparatus is only a division of logical functions, which may be fully or partially integrated into a physical entity or physically separated in an actual implementation. In addition, the units or modules in the apparatus may be realized in the form of calling software by a processor. For example, the apparatus includes a processor, the processor is connected with a memory, and instructions stored in the memory are stored, and the processor calls the instructions stored in the memory to realize any of the above methods or realize the functions of the units or modules of the apparatus. The processor is a general-purpose processor, such as a central processing unit (CPU) or a microprocessor, and the memory is a memory in the apparatus or a memory outside the apparatus. For example, the units or modules in the device may be realized in the form of a hardware circuit, and some or all of the functions of the units or modules may be realized by designing the hardware circuit. The hardware circuit may be understood as one or more processors. For example, in one implementation, the above hardware circuit is an application-specific integrated circuit (ASIC), and some or all of the functions of the above units or modules are realized by designing a logical relationship of elements in the circuit. For another example, in another implementation, the above hardware circuit may be realized by a programmable logic device (PLD). Taking a field programmable gate array (FPGA) as an example, the FPGA may include a large number of logic gates, and the connection relationship between the logic gates is configured by configuration files, to realize the functions of some or all of the above units or modules. All units or modules of the above apparatus may be realized in the form of the processor calling the software, or in the form of hardware circuit, or some of units or modules of the above apparatus is realized in the form of the processor calling the software, and remaining units or modules are realized in the form of the hardware circuit.

In embodiments of the disclosure, the processor is a circuit with a signal processing capability. In one implementation, the processor may be a circuit with a instruction reading and running capability, such as a central processing unit (CPU), a microprocessor, a graphics processing unit (GPU) (may be understood as a microprocessor), or a digital signal processor (DSP). In another implementation, the processor may realize certain functions through a logical relationship of hardware circuits, and the logical relationship of the hardware circuits are fixed or reconfigurable. For example, the processor is a hardware circuit realized by an application-specific integrated circuit (ASIC) or a programmable logic device (PLD), such as an FPGA. In a reconfigurable hardware circuit, a process that the processor loads a configuration document to realize the hardware circuit configuration may be understood as a process that the processor loads instructions to realize the functions of some or all of the above units or modules. In addition, the processor may also be a hardware circuit designed for artificial intelligence, which may be understood as the ASIC, such as a neural network processing unit (NPU), a tensor processing unit (TPU), a deep learning processing unit (DPU) and so on.

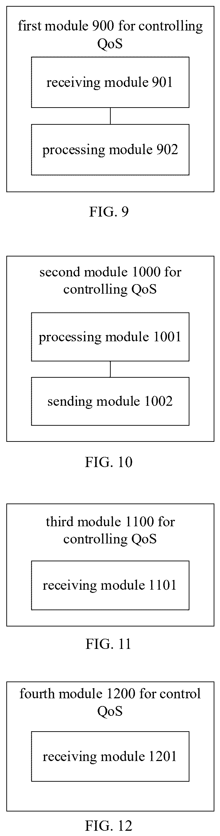

FIG. 9 is a block diagram illustrating a first apparatus for controlling QoS according to an embodiment of the disclosure. As illustrated in FIG. 9, the first apparatus 900 for controlling QoS includes: a receiving module 901 and a processing module 902. The receiving module 901 is configured to receive a first PDU, in which the first PDU belongs to a first SDF. The processing module 902 is configured to determine that the first PDU does not have an extension header, and to map the first PDU to a first PDU set, in which the extension header is used to identify a PDU set. For example, the receiving module 901 may be configured to execute the receiving-related step executed by the first network function 1031 in any of the above methods, and the processing module 902 may be configured to execute the determination and mapping-related steps executed by the first network function 1031 in any of the above methods, which are not described here. Alternatively or in addition, the first apparatus 900 for controlling QoS may further include a sending module. The sending module is configured to execute the sending-related step executed by the first network function 1031 in any of the above methods, which is not described here.

FIG. 10 is a block diagram illustrating a second apparatus for controlling QoS according to an embodiment of the disclosure. As illustrated in FIG. 10, the second apparatus 1000 for controlling QoS includes a processing module and a sending module. The processing module 1001 is configured to determine first information associated with a first SDF. The sending module 1002 is configured to send the first information to a first network function, in which the first information is used for the first network function to perform QoS control on a first PDU in the first SDF, the first PDF does not have an extension header, and the extension header is used to identify a PDU set. For example, the processing module 1001 may be configured to execute the determination-related step executed by the second network function 1032 in any of the above methods, and the sending module 1002 may be configured to execute the sending-related step executed by the second network function 1032 in any of the above methods, which are not described here. Alternatively or in addition, the second apparatus 1000 for controlling QoS may further include a receiving module. The receiving module is configured to perform the reception-related step executed by the second network function 1032 in any of the above methods, which is not described here.

FIG. 11 is a block diagram illustrating a third apparatus for controlling QoS according to an embodiment of the disclosure. As illustrated in FIG. 11, the third apparatus 1100 for controlling QoS includes a receiving module 1101. The receiving module 1101 is configured to receive a second PDU sent by a first network function, in which the second PDU is obtained by mapping a first PDU belonging to a first SDF to a first PDU set, the first PDU does not have an extension header, and the extension header is used to identify a PDU set. For example, the receiving module 1101 may be configured to execute the receiving-related step executed by the access network device 102 in any of the above methods, which is not described here. Alternatively or in addition, the first apparatus 1100 for controlling QoS may further include a sending module. The sending module is configured to execute the sending-related steps executed by the access network device 102 in any of the above methods, which is not described here.

FIG. 12 is a block diagram illustrating a fourth apparatus for controlling QoS according to an embodiment of the disclosure. As illustrated in FIG. 12, the fourth apparatus 12100 for controlling QoS incudes a receiving module 1201. The receiving module 1201 is configured to receive a second PDU from an access network device, in which the second PDU is obtained by mapping a first PDU belonging to a first SDF to a first PDU set, the first PDU does not have an extension header, and the extension header is used to identify the PDU set. For example, the receiving module 1201 may be configured to execute the receiving-related step executed by the terminal 101 in any of the above methods, which is not described here.

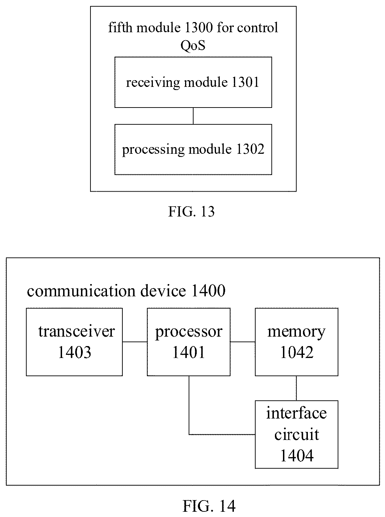

FIG. 13 is a block diagram illustrating a fifth for controlling QoS according to an embodiment of the disclosure. As illustrated in FIG. 13, the fifth apparatus 13100 for controlling QoS includes a receiving module 1301 and a processing module 1302. The receiving module 1301 is configured to receive a first PDU, in which the first PDU belongs to a first SDF. The processing module 1302 is configured to determine that the first PDU does not have an extension header, in which the extension header is used to identify a PDU set; and to map the first PDU to a first PDU set. For example, the receiving module 1301 may be configured to execute the receiving-related step executed by the core network device 103 in any of the above methods, and the processing module 1302 may be configured to execute the determining and mapping-related steps executed by the core network device 103 in any of the above methods, which are not described here. For example, the fifth apparatus 1300 for control QoS may further include a sending module. The sending module is configured to execute the sending-related step executed by the core network device 103 in any of the above methods, which is not repeated here.

FIG. 14 is a block diagram illustrating a communication device 1400 according to an embodiment of the disclosure. The communication device 1400 may be a network device (such as, an access network device, a core network device, etc.), a terminal (e.g., a user equipment, etc.), a chip, a chip system, or a processor that supports the network device to realize any of the above methods, or a chip, a chip system, or a processor that supports the terminal to realize any of the above methods. The communication device 1400 may be configured to realize the method described in the above method embodiments, for details, please refer to the description in the above method embodiments.

As illustrated in FIG. 14, the communication device 1400 includes one or more processors 1401. The processor 1401 may be a general-purpose processor or a special-purpose processor, for example, a baseband processor or a central processing unit. The baseband processor may be configured to process a communication protocol and communication data, and the central processor may be configured to control the communication device (such as a base station, a baseband chip, a terminal, a terminal chip, a distributed unit (DU) or a central unit (CU), etc.), to execute a program, and to process program data. The processor 1401 is configured to call instructions to enable the communication device 1400 to perform any of the above methods.

In some embodiments, the communication device 1401 further includes one or more memories 1402 for storing instructions. For example, all or some of the memory 1402 may be located outside the communication device 1400.

In some embodiments, the communication device 1400 further includes one or more transceivers 1403. When the communication device 1400 includes one or more transceivers 1403, the communication steps such as sending and receiving in the above method are executed by the transceiver 1403, and other steps are executed by the processor 1401.

Alternatively or in addition, the communication device 1400 further includes one or more interface circuits 1404. The interface circuit 1404 is connected with the memory 1402. The interface circuit 1404 may be configured to receive signals from or send signals to the memory 1402 or other devices. For example, the interface circuit 1404 may read instructions stored in the memory 1402 and send the instructions to the processor 1401.

The communication device 1400 described in the above embodiments may be a network device or a terminal, but the scope of the communication device 1400 described in the disclosure is not limited thereto. The structure of the communication device 1400 may not be limited by FIG. 14. The communication device may be a stand-alone device or may be a part of a large device. For example, the communication device may be: (1) a stand-alone IC, a chip, a chip system or a subsystem;(2) a collection of ICs including one or more ICs, for example, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

The disclosure also proposes a storage medium on which instructions are stored. When the instructions are executed on the communication device 1400, the communication device 1400 is caused to execute any of the above methods. For example, the storage medium is an electronic storage medium. For example, the storage medium is a computer-readable storage medium, but is not limited thereto, and the storage medium may also be a storage medium readable by other devices. For example, the storage medium may be a non-transitory storage medium, but is not limited thereto, and the storage medium may also be a transitory storage medium.

The disclosure also proposes a program product. When the program product is executed by the communication device 1400, the communication device 1400 is caused to execute any of the above methods. For example, the program product is a computer program product.

The disclosure also proposes a computer program. When the computer program is run on a computer, the computer is caused to execute any of the above method.

## Claims

1. A method for controlling quality of service (QoS), executed by a first network function, and comprising:
receiving a first packet data unit (PDU), wherein the first PDU belongs to a first service data flow (SDF);
determining that the first PDU does not have an extension header, wherein the extension header is used to identify a PDU set; and
mapping the first PDU to a first PDU set.

2. The method of claim 1, wherein the extension header comprises at least one of:
a PDU set sequence number;
a start PDU or an end PDU of the PDU set;
a PDU sequence number within the PDU set;
a number of PDUs within the PDU set;
a PDU set importance;
a PDU set size; or
an end of a data burst.

3. The method of claim 1 or 2, wherein the first PDU set is integrated by one or more PDUs, and none of the one or more PDUs comprises the extension header.

4. The method of claim 3, wherein the one or more PDUs of the first PDU set arrive within a time window.

5. The method of any of claims 1 to 4, wherein the first PDU set belongs to a first QoS flow corresponding to the first SDF, and all PDU sets in the first QoS flow have a same PDU set QoS parameter.

6. The method of claim 1, wherein determining that the first PDU does not have the extension header is achieved by at least one of:
matching a real-time transport protocol (RTP) and/or secure real-time transport protocol (SRTP) header to a payload;
using a new RTP extension header;
information provided by an N6 encapsulation header;
detection based on traffic characteristics; or
a user plane function (UPF) local configuration.

7. The method of any of claims 1 to 6, wherein mapping the first PDU to the first PDU set comprises:
mapping the first PDU to the first PDU set based on first information associated with the first SDF.

8. The method of claim 7, wherein the first information comprises at least one of: a PDU set QoS parameter, a protocol description, or a packet detection rule (PDR).

9. The method of claim 7 or 8, before receiving the first PDU, further comprising:
receiving the first information from a second network function.

10. The method of any of claims 1 to 9, after mapping the first PDU to the first PDU set, further comprising:
sending a second PDU to an access network device, wherein the second PDU is obtained by mapping the first PDU to the first PDU set.

11. A method for controlling quality of service (QoS), executed by a second network function, and comprising:
determining first information associated with a first service data flow (SDF); and
sending the first information to a first network function, wherein the first information is used for the first network function to perform QoS control on a first packet data unit (PDU) in the first SDF, the first PDF does not have an extension header, and the extension header is used to identify a PDU set.

12. The method of claim 11, wherein the first information comprises at least one of: a PDU set QoS parameter, a protocol description, or a packet detection rule (PDR).

13. The method of claim 11 or 12, wherein determining the first information associated with the first SDF comprises:
receiving second information, wherein the second information comprises at least one of: the PDU set QoS parameter or the protocol description; and
determining the first information based on the second information.

14. The method of any of claims 11 to 13, further comprising:
sending third information to an access network device, wherein the third information comprises at least one of: the PDU set QoS parameter or the protocol description.

15. A method for controlling quality of service (QoS), executed by an access network device, and comprising:
receiving a second packet data unit (PDU) sent by a first network function, wherein the second PDU is obtained by mapping a first PDU belonging to a first service data flow (SDF) to a first PDU set, the first PDU does not have an extension header, and the extension header is used to identify a PDU set.

16. The method of claim 15, wherein the first PDU set is integrated by one or more PDUs, and none of the one or more PDUs comprises the extension header.

17. The method of claim 16, wherein the one or more PDUs of the first PDU set arrive within a time window.

18. The method of any of claims 15 to 17, wherein the first PDU set belongs to a first QoS flow corresponding to the first SDF, and all PDU sets in the first QoS flow have a same PDU set QoS parameter.

19. The method of any of claims 15 to 17, wherein the second PDU comprises at least one of:
a first PDU set sequence number;
a start PDU or an end PDU of the first PDU set;
a PDU sequence number within the first PDU set;
a number of PDUs within the first PDU set;
a first PDU set importance;
a first PDU set size; or
an end of a data burst.

20. The method of any of claims 15 to 19, further comprising:
sending the second PDU to a terminal.

21. The method of any of claims 15 to 20, further comprising:
receiving third information sent by the first network function, wherein the third information comprises at least one of: a PDU set QoS parameter, or a protocol description;
wherein sending the second PDU to the terminal comprises:
sending the second PDU to the terminal based on the third information.

22. The method of claim 21, further comprising:
sending fourth information to the terminal based on the third information, wherein the fourth information comprises at least one of: the PDU set QoS parameter, or the protocol description.

23. A method for controlling quality of service (QoS), executed by a terminal, and comprising:
receiving a second packet data unit (PDU) from an access network device, wherein the second PDU is obtained by mapping a first PDU belonging to a first service data flow (SDF) to a first PDU set, the first PDU does not have an extension header, and the extension header is used to identify the PDU set.

24. The method of claim 23, further comprising:
receiving fourth information from the access network device, wherein the fourth information comprises at least one of: a PDU set QoS parameter, or a protocol description,
wherein the fourth information is used for uplink data transmission.

25. An apparatus for controlling quality of service (QoS), comprising:
a receiving module, configured to receive a first packet data unit (PDU), wherein the first PDU belongs to a first service data flow (SDF); and
a processing module, configured to determine that the first PDU does not have an extension header, and to map the first PDU to a first PDU set, wherein the extension header is used to identify a PDU set.

26. An apparatus for controlling quality of service (QoS), comprising:
a processing module, configured to determine first information associated with a first service data flow (SDF); and
a sending module, configured to send the first information to a first network function, wherein the first information is used for the first network function to perform QoS control on a first packet data unit (PDU) in the first SDF, the first PDF does not have an extension header, and the extension header is used to identify a PDU set.

27. An apparatus for controlling quality of service (QoS), comprising:
a receiving module, configured to receive a second packet data unit (PDU) sent by a first network function, wherein the second PDU is obtained by mapping a first PDU belonging to a first service data flow (SDF) to a first PDU set, the first PDU does not have an extension header, and the extension header is used to identify a PDU set.

28. An apparatus for controlling quality of service (QoS), comprising:
a receiving module, configured to receive a second packet data unit (PDU) from an access network device, wherein the second PDU is obtained by mapping a first PDU belonging to a first service data flow (SDF) to a first PDU set, the first PDU does not have an extension header, and the extension header is used to identify the PDU set.

29. A communication device, comprising:
at least one processor;
at least one memory, configured to store instructions,
wherein the processor is configured to call the instructions to enable the communication device to execute the method for controlling the quality of service (QoS) according to any one of claims 1 to 24.

30. A communication system, comprising:
a first network function, configured to execute the method according to any one of claims 1 to 10;
a second network function, configured to execute the method according to any one of claims 11 to 14;
an access network device, configured to execute the method according to any one of claims 15 to 22; and
a terminal, configured to execute the method according to claim 23 or 24.

31. A storage medium for storing instructions, wherein, when the instructions are run on a communication device, the communication device is caused to execute the method for controlling the quality of service (QoS) according to any one of claims 1 to 24.
